# EUROPÄISCHE PATENTANMELDUNG

(11) **EP 2 589 845 A1**
(43) Veröffentlichungstag der Anmeldung: **08.05.2013**
(21) Anmeldenummer: 11008771.5
(22) Anmeldetag: 03.11.2011
(51) Int. Cl.: F16L 5/08

(54) **Elastomerkörper mit Schichtenfolge**

(71) Anmelder: Hauff-Technik GmbH & Co. KG, 89542 Herbrechtingen (DE)
(72) Erfinder: Egritepe, Senol, 89520 Heidenheim (DE)
(74) Vertreter: Szynka, Dirk

(57) **Zusammenfassung**

Die vorliegende Erfindung betrifft einen Elastomerkörper (1) zum Abdichten einer von einer Leitung (41) durchsetzten Öffnung in einer Wand, der zur Anpassung an unterschiedliche Leitungsquerschnitte eine Folge mehrerer Schichten (3) aufweist, die in Anpassung an den Leitungsquerschnitt herausgenommen werden können. Dabei erfüllen die Schichten (3) erfindungsgemäß eine Längenbeziehung, aufgrund welcher ein stimseltiger Bereich zur Leitung hin nach innen abfallend, vorzugsweise gestuft ausgebildet ist, sodass die herauszunehmenden Schichten (3) durch Ansetzen der Leitung (41) ermittelt werden können. Die Leitung (41) passt zu einer ihrem Querschnitt entsprechenden Stufe.

## Beschreibung

Die vorliegende Erfindung betrifft einen Elastomerkörper zum Aufbauen eines dichtenden Verschlusses einer von einer Leitung durchsetzten Öffnung in einer Wand.

Dazu weist der Elastomerkörper eine Durchgangsöffnung für die Leitung auf und kann mit einer Spannvorrichtung verspannt und so dicht an die Leitung gepresst werden. Der Elastomerkörper kann also beispielsweise zwischen zwei Spannplatten in der Richtung der Leitung (Leitungsrichtung) komprimiert werden und expandiert infolgedessen senkrecht dazu, legt sich also dichtend an die Leitung. Da in der Praxis nicht nur unterschiedliche Leitungstypen, sondern vor allem auch verschiedene Leitungsquerschnitte abzudichten sind, muss oftmals eine Mehrzahl Elastomerkörper vorgehalten werden, deren Durchgangsöffnungen unterschiedlichen Leitungsquerschnitten entsprechen. Die Durchgangsöffnung muss nämlich innerhalb gewisser Grenzen an den Leitungsquerschnitt angepasst sein, weil sich trotz der Verformung des Elastomerkörpers beim Verspannen keine beliebig großen Distanzen überbrücken lassen.

Um mit nur einem Elastomerkörper eine Anpassung an mehrere Leitungsquerschnitte zu erreichen, betreffen jüngere Entwicklungen Elastomerkörper, bei denen in der Durchgangsöffnung eine Folge mehrerer Schichten vorgesehen ist. Diese oftmals auch als "Zwiebelschalen" bezeichneten Schichten hängen dabei üblicherweise an einer Stirnseite über Materialbrücken aneinander und sind im Übrigen durch umlaufende, parallel zur Leitungsrichtung orientierte Schnitte voneinander getrennt. Eine Schicht kann dann durch Auftrennen der sie mit dem übrigen Elastomerkörper verbindenden Materialbrücke von diesem gelöst und anschließend aus der Durchgangsöffnung genommen werden, sodass eine Anpassung der Durchgangsöffnung an den Leitungsquerschnitt möglich ist.

Der folgenden Erfindung liegt die Aufgabe zugrunde, eine möglichst vorteilhafte Ausgestaltung eines Elastomerkörpers mit Schichtenfolge anzugeben.

Erfindungsgemäß wird diese Aufgabe gelöst, indem für mindestens zwei in einer den Abstand zur Mittenachse der Leitung bestimmenden Richtung (Abstandsrichtung) nächst benachbarte Schichten in einer die Mittenachse der Leitung enthaltenden Schnittebene eine Längenbeziehung gilt, nämlich dass die in Abstandsrichtung außerhalb liegende Schicht von einer Messebene aus in zumindest einer Richtung eine in Leitungsrichtung bis zu einer Stirnseite des Elastomerkörpers genommene Länge hat, die größer als eine ebenfalls in Leitungsrichtung von derselben Messebene aus in derselben Richtung bis zu derselben Stirnseite genommene Länge der innerhalb liegenden Schicht ist; die Messebene Ist dabei senkrecht zur Leitungsrichtung orientiert und schneidet die mindestens zwei Schichten.

In anderen Worten ist (wiederum in einer die Mittenachse der Leitung beinhaltenden Schnittebene) ein der innerhalb liegenden Schicht entsprechender stimseitiger Bereich näher an der Messebene angeordnet als ein der außerhalb liegenden Schicht entsprechender stimseitiger Bereich. "Entsprechend" meint hierbei in einer Verlängerung in Leitungsrichtung liegend, sodass es an beiden (jeweils in Leitungsrichtung außerhalb liegenden) Stirnseiten des Elastomerkörpers jeweils einen einer Schicht entsprechenden Bereich gibt, der sich durch eine Projektion der jeweiligen Schicht in Leitungsrichtung auf die jeweilige Stirnseite ergibt. Im Falle eines eingangs beschriebenen Elastomerkörpers mit durch Schnitte voneinander getrennten Schichten liegt also einer der einer Schicht entsprechenden Bereiche an deren freiem Ende und der andere an der entgegengesetzten, die Materialbrücken aufweisenden Stirnseite. Eine Schicht erstreckt sich per definitionem in Leitungsrichtung von einer Stirnseite des Elastomerkörpers zu der entgegengesetzten. Die Schichtlänge wird also etwa nicht nur über eine Flanke gemessen, die durch einen nächstbenachbarte Schichten voneinander trennenden Schnitt gebildet ist, sondern von Stirnseite zu Stirnseite.

Jedenfalls ist ein (den mindestens zwei Schichten entsprechender) Bereich an mindestens einer Stirnseite dann aufgrund der Längenbeziehung nicht als zur Leitungsrichtung senkrechte Fläche ausgebildet, sondern "schräg" dazu orientiert, und zwar zur Leitung hin abfallend. Die zur Leitung hin abfallende Fläche hat gegenüber einer senkrecht dazu orientierten den Vorteil, dass der um die Leitung angeordnete Teil des Elastomerkörpers beim Verpressen in Leitungsrichtung weniger weit herausgedrückt wird. Der Erfinder hat nämlich anderenfalls, also für einen Elastomerkörper mit zur Leitungsrichtung senkrechter Stirnseite, beim Verpressen ein Hervortreten, also Ausbeulen eines beispielsweise nicht durch Spannplatten bedeckten Bereichs (der üblicherweise zumindest den Schichten entspricht) beobachtet, was optisch unvorteilhaft und auch im Hinblick auf die Kraftverteilung im Elastomerkörper nachteilig sein kann. Der erfindungsgemäß zur Leitung hin abfallende Stirnseitenbereich kann ein solches Ausbeulen jedenfalls innerhalb gewisser Grenzen kompensieren, sodass im verspannten Elastomerkörper ein den Schichten entsprechender Stimseitenbereich dann etwa im Wesentlichen senkrecht zur Leitungsrichtung orientiert sein kann.

Ferner kann eine sich aufgrund des zur Leitung hin abfallenden Stirnseitenbereichs ergebende "Vertiefung" vorteilhafterweise zur Ermittlung des Querschnitts einer hindurchzuführenden Leitung genutzt werden, und zwar indem diese an den Stirnseitenbereich angesetzt wird - die Anlagefläche ergibt dann die äußerste herauszunehmende oder die innerste am Elastomerkörper verbleibende Schicht. Die aufgrund der Längenbeziehung ausgebildete Vertiefung bietet hierbei den Vorteil, dass die Leitung beim Ansetzen zumindest etwas zentriert wird, sich also die Mittenachse der Leitung mittig in der Durchgangsöffnung ausrichtet.

Diese Vorteile kommen insbesondere zum Tragen, wenn, was im Rahmen der bevorzugten Ausgestaltungen noch näher erläutert wird, der die Längenbeziehung erfüllende Stimseitenbereich gestuft ausgebildet ist, sodass jeder Schicht eine Stufe entspricht. Die Leitung rutscht dann beim Ansetzen auf die zu ihrem Querschnitt passende Stufe, wird also in besonders zuverlässiger Weise zentriert. Ein solcher Elastomerkörper ließe sich beispielsweise auch schon mit gleichiangen Schichten realisieren, die bezogen auf die Leitungsrichtung so zueinander versetzt sind. dass die eben nicht zwingend von Stirnseite zu Stirnseite, sondern von einer zur Leitungsrichtung senkrechten Messebene aus genommene Längenbeziehung erfüllt ist (von Stirnseite zu Stirnseite gemessen wären die Schichten in diesem Beispiel gleich lang).

Sofern im Allgemeinen ein einer Schicht entsprechender Stirnseitenbereich gegenüber der Messebene verkippt, also nicht senkrecht zur Leitungsrichtung orientiert ist, soll die Längenbetrachtung für einen Mittelwert erfolgen (ist der Bereich trotz der Verkippung plan ausgebildet, liegt der Mittelwert beispielsweise zwischen der kleins-ten und der größten Ausdehnung). Soweit im Allgemeinen auf die Leitungsrichtung Bezug genommen wird, kann dies noch zwei zur Mittenachse der Leitung parallele, einander entgegengesetzte Richtungen betreffen; die Längenbeziehung ist dann jedenfalls in Bezug auf eine der beiden Richtungen erfüllt.

Die zunächst in einer die Mittenachse der Leitung beinhaltenden Schnittebene betrachtete Längenbeziehung gilt besonders bevorzugt für alle entsprechend gewählten Schnittebenen, also umlaufend. Gleichwohl können die erfindungsgemäßen Vorteile auch erreicht werden, wenn die Längenbeziehung nur in Abschnitten erfüllt ist; so können beispielsweise auch mit drei abschnittsweise die Längenbeziehung erfüllenden, etwa In 120°-Winkeln zueinander angeordneten Bereichen die herauszunehmenden Schichten bei zentrierter Mittenachse der Leitung ermittelt werden. Dennoch ist die Längenbeziehung vorzugsweise über einen Winkelbereich von in dieser Reihenfolge zunehmend bevorzugt mindestens 180°. 270°, 315°, 340° erfüllt, besonders bevorzugt eben umlaufend.

Sofern in der vorliegenden Offenbarung Angaben bezüglich der Leitungs- oder der Abstandsrichtung getroffen werden, impliziert dies nicht, dass die Leitung auch tatsächlich durch den Elastomerkörper geführt sein muss; vielmehr wird auch eine geometrische Anordnung beschrieben, als ob eine Leitung hindurchgeführt wäre.

Weitere bevorzugte Ausgestaltungen der Erfindung sind in den abhängigen Ansprüchen angegeben, wobei wie in der gesamten Offenbarung nicht im Einzelnen zwischen der Erläuterung eines Elastomerkörpers, einer Leitungsdurchführung mit einem entsprechenden Elastomerkörper und der Beschreibung von Verfahren zu deren Herstellung bzw. deren Verwendung unterschieden wird; die Offenbarung ist impllzit im Hinblick auf sämtliche Kategorien zu verstehen.

Vorzugsweise weist der Elastomerkörper eine Vielzahl Schichten auf, wobei mindestens eine Schicht die Längenbeziehung zweimal mit von einer einzigen Messebene aus in einer einzigen Richtung genommenen Längen erfüllt, und zwar jeweils paarweise mit einer innerhalb und einer außerhalb liegenden nächstbenachbarten Schicht. In anderen Worten steht die mindestens eine Schicht in jeweils einer Paarbeziehung mit ihren beiden nächstbenachbarten Schichten und ist der Längenbezie-hung entsprechend kürzer als die äußere und länger als die innere Schicht. Besonders bevorzugt gilt dies, von der innersten und der äußersten Schicht abgesehen, für die gesamte Folge, sodass der gesamte den Schichten entsprechende Stimseitenbereich zur Leitung hin abfällt und die für eine Anpassung an den Leitungsquerschnitt herauszunehmenden Schichten in besonders vorteilhafter Weise durch das eingangs beschriebene Ansetzen der Leitung bestimmt werden können.

In diesem Zusammenhang ist zu ergänzen, dass, wenngleich eine in eben beschriebener Weise über die gesamte Folge abfallende Stirnseite besonders vorteilhaft ist, auch mit einer Schichtenfolge, deren Schichten die Längenbeziehung jeweils nur einmal erfüllen, eine Bestimmung der herauszunehmenden Schichten durch Ansetzen der Leitung möglich sein kann. So wäre beispielsweise auch eine Schichtenfolge mit nur zwei Schichtenlängen (lang und kurz) denkbar, wobei sich lang und kurz in Abstandsrichtung jeweils abwechseln; an einen entsprechenden Elastomerkörper könnte dann ein Rohr mit einer Wandstärke kleiner/gleich der Schichtdicke gesetzt und könnten so die herauszunehmenden Schichten bestimmt werden. Bevorzugt sind jedoch die Längenbeziehung jeweils zweimal erfüllende Schichten.

Bei einer weiteren Ausführungsform kann die Messebene so gewählt werden, dass die von der Messebene aus genommene Länge der mindestens zwei Schichten deren tatsächlicher Länge entspricht, also der von Stirnseite zu Stirnseite genommenen Länge. Dazu wird die Messebene in eine Stirnseite des Elastomerkörpers gelegt und die Länge einer Schicht zu der entgegensetzen Stirnseite hin genommen; "Schneiden" (bezogen auf die Messebene) meint also zumindest Berühren. Da die Längenbeziehung für mindestens zwei, vorzugsweise eine Mehrzahl, Schichten von derselben Messebene aus zu erfüllen ist, wird die Stirnseite mit Messebene (von gegebenenfalls Fertigungsschwankungen abgesehen) in einer zur Leitungsrichtung senkrechten Ebene liegen; üblicherweise sind die freien Enden der Schichten der Längenbeziehung entsprechend zueinander versetzt,

Vorzugsweise ist an mindestens einer von zwei Stirnseiten ein den die Längenbeziehung erfüllenden Schichten entsprechender Bereich gestuft ausgebildet, und zwar mit jeweils einer Schicht entsprechenden Stufen. Es ist also beispielsweise ein kreisringförmiger, einer Schicht entsprechender Bereich als zur Leitungsrichtung senk-rechtes Plateau ausgebildet, an das, jeweils in Leitungsrichtung versetzt dazu, den übrigen Schichten entsprechende Plateaus anschließen. "Stufe" meint also ein vorzugsweise planes Plateau, das mit der Leitungsrichtung einen (kleineren) Winkel von mindestens 60° einschließt, vorzugsweise mindestens 75°, und besonders bevorzugt senkrecht dazu ist. Nächstbenachbarte Stufen sind in Leitungsrichtung zueinander versetzt, gehen also nicht stetig ineinander über, vorzugsweise sind die Stufen nach Art einer Treppe versetzt, und zwar zur Leitung hin monoton fallend, also absteigend. Wird zur Ermittlung der herauszutrennenden Schichten eine Leitung an einen entsprechend gestuften Elastomerkörper gesetzt, rutscht die Leitung in besonders zuverlässiger und insofern auch Messfehler vermeidender Weise auf das passende Plateau, In bevorzugter Ausgestaltung bilden die freien Enden der Schichten die Stufen, sind also die freien Enden die Längenbeziehung erfüllend zueinander versetzt.

Generell ist eine Stufe in bevorzugter Ausgestaltung in Leitungsrichtung um mindestens 10 %, In dieser Reihenfolge zunehmend bevorzugt um mindestens 20 %, 30 %, 40 %. 50 %, ihrer in Abstandsrichtung genommenen Breite gegenüber der innerhalb nächst benachbarten Schicht versetzt. Je weiter die Stufen zueinander versetzt sind, desto zuverlässiger rutscht die Leitung auf die passende Stufe; auch die eingangs erwähnten Vorteile die Auswölbung des Elastomerkörpers und den Kraftverlauf darin betreffend können besser verwirklicht werden.

Auch im Falle eines nicht gestuft ausgebildeten, sondern "stetigen" Stirnseitenbereichs sind die nächstbenachbarten Schichten entsprechenden Stimseitenbereiche (deren eingangs für verkippte Stimseitenbereiche beschriebenen Mittelwerte) in Leitungsrichtung vorzugsweise gleichermaßen versetzt wie vorstehend für die Stufen beschrieben, wobei der Versatz in Leitungsrichtung auf die in Abstandsrichtung genommene Breite der jeweils äußeren Schicht bezogen wird. Auf eine in Leitungsrichtung, außerhalb des (gestuft) abfallenden Bereichs von Stirnseite zu Stirnseite genommene Länge des Elastomerkörpers bezogen sind die Mittelwerte/Stufen nächstbenachbarter Schichten um vorzugsweise mindestens 1 %, besonders bevorzugt mindestens 1,5 % bzw. mindestens 2 %, der Elastomerkörperlänge zueinander versetzt.

Ein weiterer Vorteil eines der Längenbeziehung entsprechend zu der Leitung hin gestuft abfallenden Stirnseitenbereichs betrifft die Herstellung eines entsprechenden Elastomerkörpers. An einer Flanke zwischen zwei Stufen ist ein Schneidwerkzeug, mit dem die Trennfläche zwischen zwei nächst benachbarten Schichten, also ein umlaufender Schnitt, eingebracht wird, gut geführt.

Der Erfindungsgedanke wurde bislang anhand eines, gegebenenfalls von radialen Schnitten abgesehen, einstückigen Elastomerkörpers illustriert, ist jedoch hierauf nicht beschränkt. Es kann also beispielsweise auch ein aus mindestens zwei für sich einstückigen Elastomerkörperteilen zusammengesetzter Elastomerkörper vorgesehen sein, bei dem die Leitung in jeder Schicht der Folge vollständig von Schalen umgeben ist, von welchen Schalen an einem ersten Elastomerkörperteil eine Mehrzahl in Abstandsrichtung aufeinanderfolgend vorgesehen ist. Dabei liegt zwischen zwei in Abstandsrichtung nächstbenachbarten Schalen dieses ersten Elastomerkörperteils ein Zwischenraum vor, in dem eine Schale eines anderen als des den Zwischenraum bildenden Elastomerkörperteils angeordnet ist.

Eine "Schale" ist in diesem Kontext ein Segment einer Schicht. Eine Schicht kann also beispielsweise aus einer Schale aufgebaut sein, die gegebenenfalls auch durch einen sich von der Leitung weg erstreckenden Schnitt durchtrennt sein kann, oder aus mehreren (mindestens zwei) in Umlaufrichtung aneinandergrenzenden Schalen. Im Falle einer Leitung mit einem kreisförmigen Querschnitt können die Schalen dann Rotationskörper oder, wenn mehrere Schalen gemeinsam eine Schicht bilden, Kreissegmente davon sein und eine gemeinsame, in Leitungsrichtung ausgerichtete Rotationsachse haben.

Jedenfalls ist das erste Elastomerkörperteil dann in einer die Mittenachse der Leitung beinhaltenden Schnittebene kammartig aufgebaut, wobei die Kammzinken den Schalen entsprechen und in den Zwischenräumen zwischen den Zinken die Schalen eines anderen Elastomerkörperteils oder anderer Elastomerkörperteile angeordnet werden. Die In den Zwischenräumen vorgesehenen Schalen können ebenfalls kammartig verbunden sein, sodass der Elastomerkörper in diesem Bild zwei mit den Zinken ineinander geschobenen Kämmen entspricht. Da bezogen auf die Abstandsrichtung zwischen den Schalen eines Elastomerkörperteils also immer ein mindestens einer

Schicht entsprechender Zwischenraum vorgesehen ist, müssen die Schichten nicht durch aufwendige Schneidevorgänge erzeugt werden; ein entsprechendes Elastomerkörperteil mit hinreichend großen Zwischenräumen kann nämlich auch in einem formenden Verfahren erzeugt werden, etwa durch Spritzguss, Pressen oder Transferpressen.

Wenngleich zwei vorstehend beschriebene, kammartig ineinandergreifende Elastomerkörperteile bevorzugt sind, können in den Zwischenräumen eines Elastomerkörperteils beispielsweise auch lose Schichten, also rohrförmige Körper, oder auch mehrere Schichten angeordnet werden, die an einem oder vorzugsweise an jeweils einem eigenen Elastomerkörperteil vorgesehen sind. In der bisherigen Analogie bleibend könnten also beispielsweise zwei ineinandergesteckte Kämme vorgesehen sein, wobei jeweils zwei Zinken aneinander anllegen und zu den nächst benachbarten (jeweils zwei Zinken) noch immer ein Zwischenraum verbleibt. In diese Zwischenräume eingeschobene Schichten können dann beispielsweise über eine stirnseitige Materialbrücke zu einem dritten Elastomerkörperteil verbunden sein.

Im Allgemeinen, also nicht nur im Falle eines in den vorstehenden Absätzen erläuterten mehrteiligen Elastomerkörpers, hängt vorzugsweise eine jede Schicht (oder Schale einer Schicht) mit mindestens einer weiteren Schicht (oder Schale einer weiteren Schicht) einstückig verbunden zusammen, liegen also keine losen Schichten/Schalen vor; besonders bevorzugt sind demgemäß jeweils eine Vielzahl Schichten (oder Schalen davon) einstückig miteinander verbunden, im Falle eines Elastomerkörpers mit durch Schnitte voneinander getrennten Schichten sämtliche Schichten.

Sofern zwei kammartige Elastomerkörperleile ineinandergreifen, ist ein aufgrund der Längenbeziehung zur Leitung hin abfallender Stimseitenbereich dann notwendigerweise den freien Enden der Elastomerkörperteile entgegengesetzt stirnseitig ausgebildet; die freien Enden eines Elastomerkörperteils sind nämlich (zumindest bereichsweise) zur Stirnseite hin durch die Materialbrücken (den Kammkörper) abgedeckt. Besonders bevorzugt ist der den freien Enden entgegengesetzte stimseitige Bereich eines Elastomerkörperteils dann den Schichten entsprechend gestuft ausgebildet. Sofern zwei derartige Elastomerkörperteile Ineinandergesetzt werden, kann die Leitung zur Ermittlung der herauszunehmenden Schichten wahlweise an beide Stirnseiten gesetzt werden.

Im Übrigen lassen sich durch einen aufgrund der Längenbeziehung abfallend bzw. gestuft ausgebildeten Stimseitenbereich im Falle eines aus mehreren Elastomerkörperteilen zusammengesetzten Elastomerkörpers gleichermaßen die eingangs anhand eines Elastomerkörpers mit geschnittenen Schichten erläuterten Vorteile erzielen und umfassen die eingangs erläuterten Merkmale insofern auch einen mehrteiligen Elastomerkörper.

Bei einer weiteren bevorzugten Ausführungsform ist ein zu dem aufgrund der Längenbeziehung geneigten Stimseitenbereich komplementärer Einsatz vorgesehen, der von jenen des Elastomerkörpers abweichende Materialeigenschaften aufweist. Der Einsatz kann also beispielsweise mit dispergierten Festkörperpartikein versetzt und so etwa im Hinblick auf Brandschutz oder zur EMV-Abschirmung optimiert sein.

Die Erfindung betrifft auch die Verwendung eines entsprechenden Elastomerkörpers zum Abdichten einer Strom-, Gas-, Wasser-, Wärme-, Telekommunikations-, Signal-oder Datenleitung in einer Gebäudewand, Schiffswand oder Gehäusewand.

Dazu wird die hindurchzuführende Leitung vorzugsweise an einen den Schichten entsprechenden und aufgrund der Längenbeziehung geneigten Stirnseitenbereich gesetzt und werden so In der eingangs beschriebenen und im Folgenden anhand eines konkreten Beispiels erläuterten Weise die herauszunehmenden Schichten bestimmt.

Im Folgenden wird die Erfindung anhand von Ausführungsbeispielen näher erläutert; im Einzelnen zeigt
- Figur 1: einen Elastomerkörper mit Schichtenfolge und umlaufenden Schnitten zwischen den Schichten, wobei ein den Schichten entsprechender stimseitiger Bereich in erfindungsgemäßer Weise gestuft ausgebildet ist;
- Figur 2: einen Elastomerkörper, an dessen beiden Stirnseiten den Schichten entsprechende Stufen vorgesehen sind;
- Figur 3: einen Elastomerkörper mit den Schichten entsprechend gestuften Stimseitenbereichen, der aus zwei einstückigen, kammartig ineinandergreifenden Elastomerkörperteilen zusammengesetzt ist;
- Figur 3a: eine vergrößerte Darstellung der kammartig ineinandergreifenden Elastomerkörperteile gemäß Figur 3;
- Figur 4: wie eine Leitung angesetzt wird, um die für das Hindurchführen herauszunehmenden Schichten zu ermitteln;

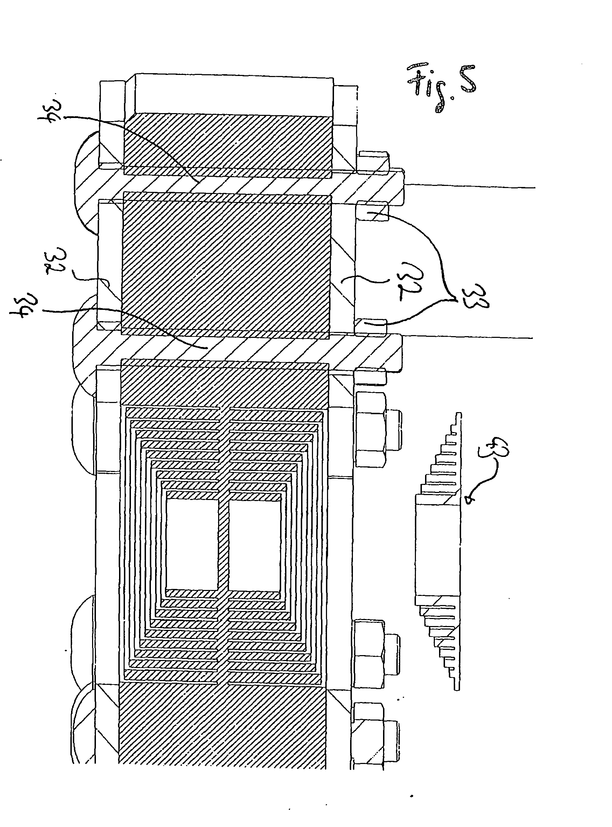

- Figur 5: einen zu dem gestuften Stirnseitenbereich komplementären Einsatz mit verbesserten Brandschutzeigenschaften.

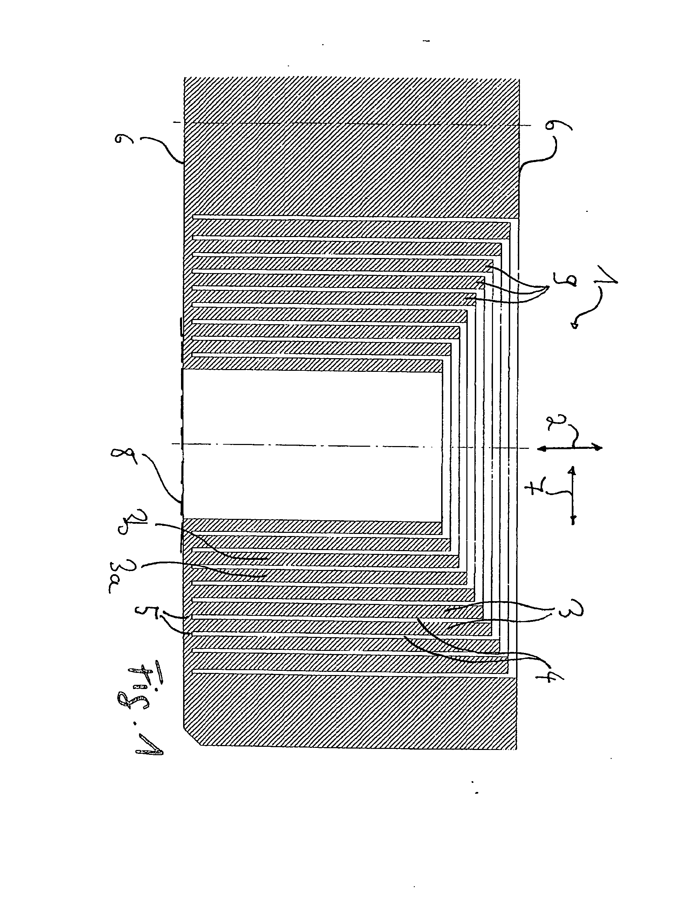

Figur 1 illustriert einen Elastomerkörper 1 mit einer Folge sich in Leitungsrichtung 2 erstreckender Schichten 3, die durch umlaufende Schnitte 4 voneinander getrennt sind und lediglich über stimseitige Materialbrücken 5 aneinanderhängen, Durch Abtrennen und Herausnehmen einer entsprechenden Zahl Schichten 3 kann die Durchgangsöffnung in dem Elastomerkörper 1 an den Durchmesser einer hindurchzuführenden Leitung angepasst werden.

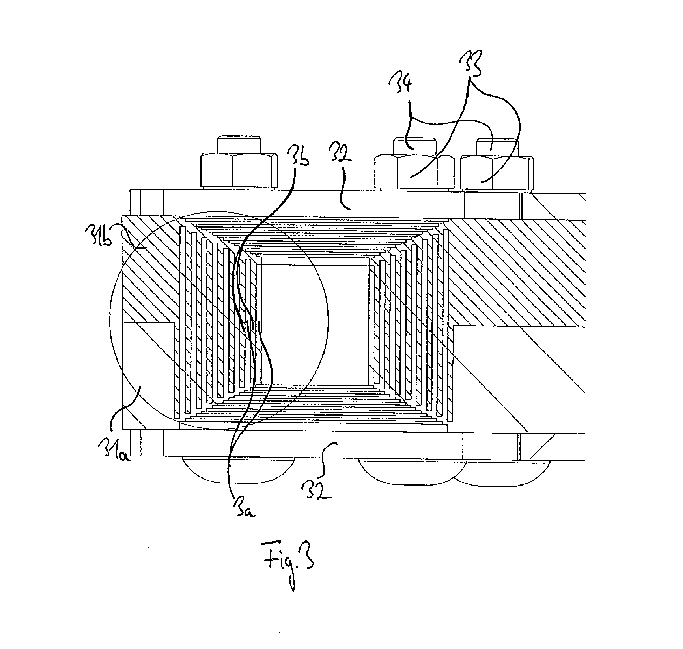

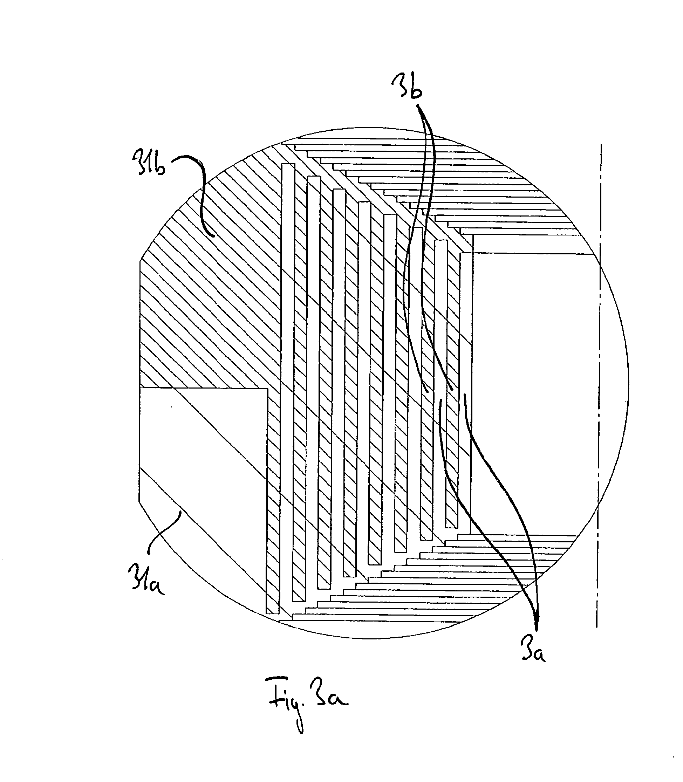

Durch hier nicht gezeigte, jedoch analog zu jenen von Figur 3 aufgebaute Klemmkörper, die an beiden Stirnseiten 6 vorgesehen und durch das Anziehen von den Elastomerkörper 1 durchsetzenden Bolzen aufeinander zu bewegt werden, kann der Elastomerkörper 1 in Leitungsrichtung 2 komprimiert werden. Infolge der daraus resultierenden Expansion senkrecht dazu, also in Abstandsrichtung 7, legt sich der Elastomerkörper 1 dichtend an die Leitung und eine Laibung der Wandöffnung an.

Zur Ermittlung der vor dem Hindurchführen der Leitung herauszunehmenden Schichten 3 ist ein den Schichten 3 entsprechender Stirnseitenbereich gestuft ausgebildet, und zwar an deren freien Enden 9 mit zur Leitung hin absteigenden Stufen. Dabei entspricht jeder Schicht 3 eine Stufe. Wenn also dann eine Leitung zur Ermittlung der herauszunehmenden Schichten 3 an den gestuften Stimseitenbereich gesetzt wird und auf eine ihrem Durchmesser entsprechende Stufe rutscht, also auf eine Stufe, deren Innendurchmesser kleiner als der Außendurchmesse der Leitung ist, entspricht diese Stufe der (äußersten) herauszunehmenden oder der (innersten) verbleibenden Schicht 3. Die Leitung kann auch mit einem gewissen Druck angesetzt werden, sodass die entsprechende Schicht 3 gegebenenfalls auch ein Stück weit in. Leitungsrichtung 2 verschoben wird; sofern die Materialbrücken 5 hinreichend dünn ausgebildet sind, also die entsprechende Schicht 3 auch an dem der angedrückten Leitung entgegengesetzten Ende ausgelenkt werden kann, zeichnet sich die Leitung an der die Materialbrücken 5 aufweisenden Stirnseite 6 ab. Es kann dann direkt ein Schneidwerkzeug angesetzt und können die herauszunehmenden Schichten 3 vom übrigen Elastomerkörper 1 getrennt werden.

Der den Schichten 3 entsprechende Stirnseitenbereich ist gestuft ausgebildet, weil die Schichten 3 die Längenbeziehung erfüllen: Von einer zur Leitungsrichtung 2 senkrechten Messebene 8 aus, die in diesem Fall in die (in der Figur untere) Stirnseite 6 des Elastomerkörpers 1 gelegt werden kann, hat eine Schicht 3a eine größere Länge als eine Abstandsrichtung 7 innerhalb nächst benachbarte Schicht 3b von derselben Messebene 8 aus in derselben Richtung genommen. Die Messebene 8 berührt also die Stirnseite 6 und schneidet damit definitionsgemäß die Schichten 3. Vorliegend ist die Messebene 8 so gewählt, dass die jeweils zu einem freien Ende 9 einer Schicht 3 genommene Länge deren tatsächlicher Länge entspricht (von Stirnseite zu Stirnseite gemessen).

Von der innersten und der äußersten Schicht 3 abgesehen, erfüllt jede Schicht 3 die Längenbeziehung zweimal, also jeweils paarweise mit einer innerhalb und der außerhalb nächst benachbarten Schicht 3.

Für den in Figur 1 gezeigten Elastomerkörper 1 ist die Längenbeziehung von der Messebene 8 aus in genau einer Leitungsrichtung 2 (in der Figur nach oben) erfüllt; auch wenn die Messebene 8 nach oben verschoben würde, wäre die Längenbeziehung zu der nicht gestuften Stirnseite 6 hin nicht erfüllt, weil diese eben zur Messebene 8 parallel ist.

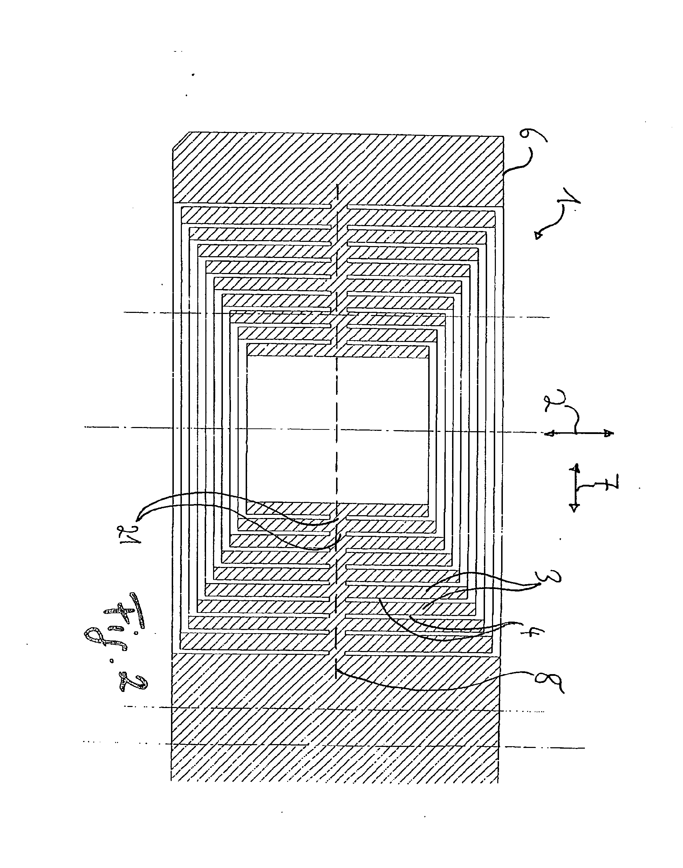

Bei dem in Figur 2 gezeigten Elastomerkörper 1 hingegen ist die Längenbeziehung in beiden Leitungsrichtungen 2 (nach oben und nach unten) erfüllt, weil an beiden Stirnseiten 6 ein den Schichten 3 entsprechender Bereich gestuft ausgebildet ist. Die die Schichten 3 zusammenhaltenden Materialbrücken 21 sind in diesem Fall nicht stirnseitig, sondem bezogen auf die Leitungsrichtung 2 innerhalb des Elastomerkörpers1 vorgesehen. Gleichwohl sind die Schichten 3 durch umlaufende und in diesem Fall von beiden Stirnseiten 6 her eingebrachte Schnitte 4 (von den Materialbrücken 21 abgesehen) voneinander getrennt.

Der in Figur 3 gezeigte Elastomerkörper 1 ist hingegen aus zwei für sich einstückigen, jeweils eine Mehrzahl Schichten aufweisenden Elastomerkörperteilen 31a,b zusammengesetzt, deren Schichten 3a,b wie zwei Kämme ineinander greifen. Figur 3a veranschaulicht dies in vergrößerter Darstellung. Den Zwischenraum zwischen zwei Schichten eines Elastomerkörperteils 31a,b füllt dann jeweils eine Schicht 3a,b des anderen Elastomerkörperteils 31a,b aus. (Bezogen auf den gesamten Elastomerkörper 1 erstreckt sich eine Schicht 3a,b wiederum von Stirnseite 6 zu Stirnseite 6, zählt also zu den Schichten 3 eines Elastomerkörperteils 3a,b jeweils ein die Schichten verbindender stimseitiger Bereich des anderen Elastomerkörperteils.)

In Figur 3 sind ferner die bereits im Kontext von Figur 1 erläuterten Spannplatten 32 gezeigt, die durch Anziehen der Muttern 33 auf den Spannbolzen 34 aufeinander zu bewegt werden.

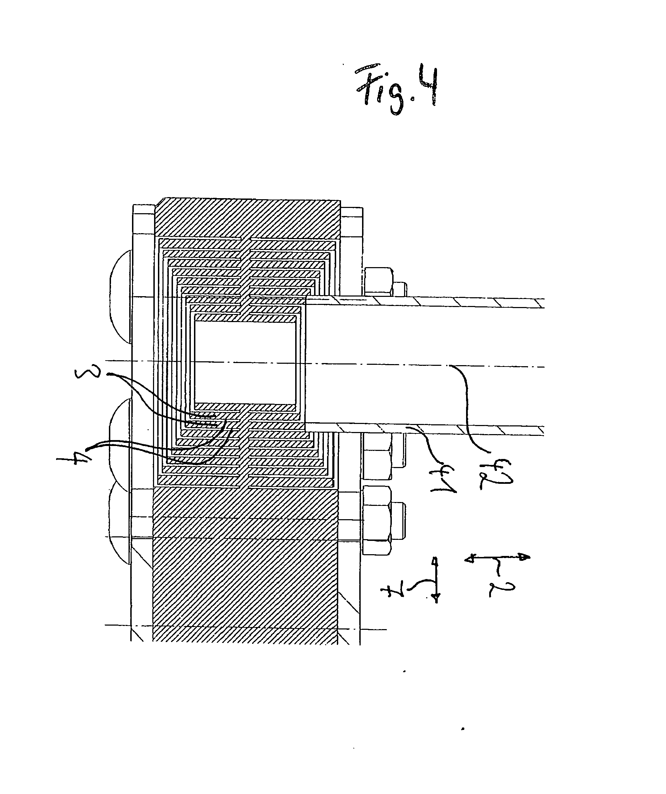

Figur 4 zeigt den anhand von Figur 2 in einer Detailansicht erläuterten Elastomerkörper 1 in einer zur Leitungsrichtung 2 parallelen Schnittebene und in Aufsicht. Der Elastomerkörper 1 ist also zum Hindurchführen von drei Leitungen ausgelegt, wobei in einer jeden der drei Durchgangsöffnungen eine in erfindungsgemäßer Weise gestufte Schichtenfolge vorgesehen ist. Eine hindurchzuführende Leitung 41 wird dann wie skizziert angesetzt und so die (äußerste) herauszunehmende oder (innerste) verbleibende Schicht 3 bestimmt. In dieser Abbildung ist auch die zur Leitungsrichtung 2 parallele Mittenachse 42 der Leitung 41 illustriert.

in beziehungsweise an den aufgrund der Längenbeziehung gestuften Bereich um die Durchgangsöffnung kann ferner ein Einsatz 43 gesetzt werden, der aufgrund dispergierter Tonpartikel gegenüber dem Elastomerkörper. 1 verbesserte Brandschutzeigenschaften aufweist. Die Tonpartikel expandieren und veraschen unter Hitzeeinwirkung, so dass beispielsweise ein hindurchgeführtes Kabel, insbesondere dessen Metallkem, abgedrückt wird, was eine Wärmebrücke unterbricht. Da Kabel beispielsweise gegenüber Wasserrohren üblicherweise einen kleineren Durchmesser haben, also allenfalls wenige Schichten ausgetrennt werden müssen, kann im Falle eines Kabels beispielsweise auch eine dementsprechend noch hinreichend brandschützende Hülse 43 verbleiben. Aufgrund der Stufen "verkrallt" sich diese vorteilhafterweise an der gestuften Stirnseite, insbesondere bei einer Expansion im Brandfall. (Im Falle eines unter Umständen das Austrennen eines Großteils der Schichten 3 erfordernden Wasserrohrs wird eine Brandschutzhülse gegebenenfalls gar nicht notwendig sein).

## Patentansprüche

1. Elastomerkörper (1) zum Aufbauen eines dichtenden Verschlusses einer von einer Leitung (41) durchsetzten Öffnung in einer Wand,
wozu der Elastomerkörper (1) eine Durchgangsöffnung für die Leitung (41) aufweist und mit einer Spannvorrichtung (32, 33, 34) spannbar und dadurch dicht auf die Leitung (41) anpressbar ist,
wobei der Elastomerkörper (1) zur Anpassung der Durchgangsöffnung an unterschiedliche Leitungsquerschnitte eine Folge mehrerer, hinsichtlich einer den Abstand zur Mittenachse (42) der Leitung (41) bestimmenden Richtung (7) benachbarter Schichten (3) aufweist und
für mindestens zwei in Abstandsrichtung (7) nächst benachbarte Schichten (3) in einer die Leitungsrichtung (2) enthaltenden Schnittebene eine Längenbeziehung gilt, nämlich dass die in Abstandsrichtung (7) außerhalb liegende Schicht (3a) von einer Messebene (8) aus, die senkrecht zur Leitungsrichtung (2) orientiert ist und die mindestens zwei Schichten (3) schneidet, in zumindest einer Richtung eine in Leitungsrichtung (2) bis zu einer Stirnseite (6) des Elastomerkörpers (1) genommene Länge hat, die größer als eine ebenfalls In Leitungsrichtung (2) von derselben Messebene (8) aus in derselben Richtung bis zu derselben Stirnseite (6) des Elastomerkörpers (1) genommene Länge der innerhalb liegenden Schicht (3b) ist.

2. Elastomerkörper (1) nach Anspruch 1 mit einer Vielzahl Schichten (3), wobei mindestens eine Schicht (3) die Längenbeziehung zweimal mit von einer einzigen Messebene (8) aus in einer einzigen Richtung genommenen Längen erfüllt, und zwar paarweise mit einer innerhalb und einer außerhalb liegenden nächst benachbarten Schicht (3).

3. Elastomerkörper (1) nach Anspruch 1 oder 2, bei welchem die Messebene (8) so gewählt werden kann, dass die von der Messebene (8) aus genommene Länge der mindestens zwei Schichten (3) deren tatsächlicher Länge entspricht.

4. Elastomerkörper nach Anspruch 3, bei welchem die tatsächliche Länge der mindestens zwei Schichten (3) von der entsprechend gewählten Messebene (8) aus zu freien Enden (9) der mindestens zwei Schichten (3) genommen wird.

5. Elastomerkörper (1) nach einem der vorstehenden Ansprüche, bei dem an mindestens einer von zwei Stirnseiten (6) ein Bereich aufgrund der Längenbeziehung gestuft ausgebildet ist, und zwar mit in Bezug auf die Abstandsrichtung (7) den Schichten (3) entsprechenden Stufen.

6. Elastomerkörper (1) nach den Ansprüchen 4 und 5, bei dem die mindestens zwei freien Enden (9) der mindestens zwei Schichten (3) bezogen auf die Leitungsrichtung (2) zueinander versetzt sind und so die Stufen bilden.

7. Elastomerkörper (1) nach Anspruch 5 oder 6, bei dem eine Stufe zu der außerhalb nächstbenachbarten Stufe in Leitungsrichtung (2) um mindestens 10 % ihrer in Abstandsrichtung (7) genommenen Breite versetzt ist.

8. Elastomerkörper (1) nach einem der vorstehenden Ansprüche aus mindestens zwei für sich einstückigen Elastomerkörperteilen (31 a,b), bei dem die Leitung (41) im verpressten Zustand des Elastomerkörpers (1) in jeder Schicht (3) der Folge vollständig von Schalen umgeben ist, von welchen Schalen an einem ersten Elastomerkörperteil (31a,b) eine Mehrzahl in Abstandsrichtung (7) aufeinander folgend vorgesehen ist,
wobei zwischen zwei in Abstandsrichtung (7) nächst benachbarten Schalen dieses ersten Elastomerkörperteils (31a,b) ein Zwischenraum vorliegt, in welchem mindestens eine Schale eines anderen als des den Zwischenraum bildenden Elastomerkörperteils (31a,b) angeordnet ist.

9. Elastomerkörper (1) nach Anspruch 8 in Verbindung mit Anspruch 5, bei dem ein stirnseitiger, den freien Enden (9) der an dem ersten Elastomerkörperteil (31 a,b) ausgebildeten Schalen entgegengesetzter Bereich des ersten Elastomerkörperteils (31a,b) den Schichten (3) entsprechend gestuft ist.

10. Elastomerkörper (1) nach einem der vorstehenden Ansprüche mit einem zu dem aufgrund der Längenbeziehung geneigten Stirnseitenbereich komplementären Einsatz (43), der von jenen des Elastomerkörpers (1) abweichende Materialeigenschaften aufweist, insbesondere zumindest eines von verbesserten Brandschutz- und EMV-Schutzeigenschaften,

11. Verfahren zur Herstellung eines Elastomerkörpers (1) nach einem der Ansprüche 1 bis 7 mit einem aufgrund der Längenbeziehung gestuften Stirnseitenbereich, wobei eine umlaufende Trennfläche (4) zwischen zwei nächst benachbarten Schichten (3) mit einem Schneidwerkzeug in den Elastomerkörper (1) eingebracht wird, und zwar indem das Schneidwerkzeug an den gestuften Stimseitenbereich gesetzt wird und dabei an einer Flanke einer Stufe geführt ist.

12. Verwendung eines Elastomerkörpers (1) nach einem der Ansprüche 1 bis 10 zum Abdichten einer Strom-, Gas-, Wasser-, Wärme-, Telekommunikations-, Signal- oder Datenleitung in einer Gebäudewand, Schiffswand oder Gehäusewand.

13. Verwendung nach Anspruch 12 zur Anpassung der Durchgangsöffnung an unterschiedliche Leitungsquerschnitte, indem die Leitung (41) an einen den Schichten (3) entsprechenden und aufgrund der Längenbeziehung geneigten Stimseitenbereich gesetzt wird und so die herauszunehmenden Schichten (3) bestimmt werden.
